(19) Europäisches Patentamt
European Patent Office
Office européen des brevets

(11) EP 1 069 144 B1

(12) EUROPÄISCHE PATENTSCHRIFT

(45) Veröffentlichungstag und Bekanntmachung des Hinweises auf die Patenterteilung:
**08.06.2005 Patentblatt 2005/23**

(51) Int Cl.[7]: **C08G 18/08**, C08G 18/67, C09D 175/04, C09D 175/14

(21) Anmeldenummer: **00115226.3**

(22) Anmeldetag: **13.07.2000**

# (54) Härtbares Polyurethanpolymerisat

Curable polyurethane polymer

Polymère de polyuréthane durcissable

(84) Benannte Vertragsstaaten:
**AT BE CH CY DE DK ES FI FR GB GR IE IT LI LU MC NL PT SE**

(30) Priorität: **14.07.1999 DE 19933012**

(43) Veröffentlichungstag der Anmeldung:
**17.01.2001 Patentblatt 2001/03**

(73) Patentinhaber: **BASF AKTIENGESELLSCHAFT
67056 Ludwigshafen (DE)**

(72) Erfinder:
- **Paulus, Wolfgang
55270 Ober-Olm (DE)**
- **Lebkücher, Werner
67159 Friedelsheim (DE)**
- **Menzel, Klaus
67069 Ludwigshafen (DE)**
- **Reich, Wolfgang
67133 Maxdorf (DE)**

(74) Vertreter: **Kinzebach, Werner, Dr. et al
Patentanwälte,
Reitstötter, Kinzebach & Partner,
Ludwigsplatz 4
67059 Ludwigshafen (DE)**

(56) Entgegenhaltungen:
**EP-A- 0 331 409**
**EP-A- 0 753 531**
**US-A- 5 089 376**
**US-A- 5 306 764**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 069 144 B1

Printed by Jouve, 75001 PARIS (FR)

## Beschreibung

Die vorliegende Erfindung betrifft ein härtbares Polyurethanpolymerisat, welches wenigstens ein hydroxylgruppenhaltiges Präpolymer mit mindestens einer thermisch oder photochemisch radikalisch polymerisierbaren α,β-ethylenisch ungesättigten Doppelbindung, einpolymerisiert enthält. Die Erfindung betrifft weiterhin eine wässrige Polymerdispersion, die ein solches härtbares Polymerisat in dispergierter Form enthält und die Verwendung des Polymerisates bzw. der Polymerisatdispersion zur Beschichtung von Substraten.

Wässrige Polyurethandispersionen, die Komponenten mit ethylenisch ungesättigten Gruppen enthalten, haben eine breite Anwendung gefunden. Sie dienen vor allem der Herstellung von Beschichtungen auf nicht-flexiblen Substraten, wie z. B. Holz, und flexiblen Substraten, wie z. B. Leder. Auf Grund ihrer Fähigkeit zur Vernetzung, erhält man aus diesen Dispersionen im Allgemeinen Filme mit guten anwendungstechnischen Eigenschaften, wie z. B. Chemikalienbeständigkeit und erhöhter mechanischer Stabilität, verglichen mit nicht vernetzbaren Polyurethandispersionen. Zur Herstellung von Beschichtungen auf Substraten, die nicht oder nur gering thermisch belastbar sind, werden im Allgemeinen Polyurethandispersionen eingesetzt, die strahlungshärtbar sind. Eine wichtige Eigenschaft dieser durch UV-Bestrahlung oder mittels Elektronenstrahlung härtbaren Dispersionen ist, dass bereits nach dem Verdunsten des enthaltenen Wassers Filme resultieren, die eine möglichst klebfreie und gegebenenfalls bereits mechanisch beanspruchbare Oberfläche ergeben. Dies ermöglicht zum einen auch eine Beschichtung von Substraten, die auf Grund ihrer äußeren Form Strahlenschattenbereiche aufweisen und somit technisch bedingt nicht vollständig der Strahlungshärtung zugängig sind. Zum anderen können die Substrate so bereits vor der Härtung mechanisch bearbeitet werden. Dies ist insbesondere bei der Herstellung von Beschichtungen auf Holz wichtig, da hier die Oberflächen vor der Härtung im Allgemeinen geschliffen werden, z. B. um die aufgestellten Holzfasern zu entfernen und um in einem zweiten Lackierschritt eine glatte Fläche zu erhalten. Ein weiterer Vorteil liegt in der Klebfreiheit dieser Beschichtungen, so dass die Oberflächen, z. B. beim Stapeln, nicht aneinander kleben.

Die DE-A-34 37 918 beschreibt wässrige Oligourethandispersionen mit eingebauten, ungesättigten Gruppen und ihre Verwendung zur Herstellung von hochglänzenden Lacken auf Leder. Die EP-A-0 554 784 beschreibt wässrige Dispersionen eines strahlungshärtbaren Polyurethans, welches als Aufbaukomponenten Isocyanuratoder Biuretgruppen aufweisende Polyisocyanate und Polyole enthält. Nach Verdunsten des Wassers erhält man aus den zuvor genannten Polyurethandispersionen Überzüge, die vor der Strahlungshärtung noch nicht mechanisch belastbar sind bzw. klebrige Oberflächen ergeben.

Die EP-A-0 209 684 beschreibt wässrige Emulsionen auf der Basis ionischer Urethanharnstoffacrylate.

Keine der zuvor genannten Publikationen beschreibt Polymerdispersionen auf Basis von Polyurethanen, die hydroxylgruppenhaltige Präpolymere mit α,β-ethylenisch ungesättigten Doppelbindungen einpolymerisiert enthalten.

Die US-A-4,357,221 beschreibt ein Verfahren zur Beschichtung elektrisch leitender Teile, wobei ein anionisches Polyurethanadditionsprodukt eingesetzt wird, welches α,β-ethylenisch ungesättigte, strahlungshärtbare Doppelbindungen aufweist. Zur Herstellung dieses Produktes wird eine Lösung eines Polyurethans auf Basis eines Acrylesterdiols, eines nieder- oder hochmolekularen Kettenverlängerers und eines Polyisocyanates mit einem Mercaptocarbonsäuresalz umgesetzt. Die Einführung der Carboxylatgruppe in das Polyurethan erfolgt dabei nicht durch Addition der Mercaptogruppe an eine Isocyanatgruppe, sondern an eine der im Polyurethan vorhandenen Doppelbindungen unter Ausbildung einer Mercaptoetherbrücke.

Die DE-A-40 31 732 beschreibt strahlungshärtbare, wässrige Bindemitteldispersionen, die

a) 5 bis 95 Gew.-% eines selbstdispergierbaren Polyurethans,

b) 5 bis 95 Gew.-% eines mit Hilfe von c) dispergierbaren Präpolymers oder Präpolymerengemisches,

c) 0 bis 30 Gew.-% eines Schutzkolloids

aufweisen.

Bei der Komponente a) handelt es sich nicht um ein acrylathaltiges Präpolymer. Bei den Präpolymeren b) kann es sich um Polyester, Polyether, Polyepoxide oder Polyurethane handeln, die den wässrigen Dispersionen separat zugegeben werden, die also nicht an die Polyurethankomponente a) gebunden sind. Die mit den Dispersionen auf Basis einer Mischung aus a) und b) erhaltenen Beschichtungen sind in Bezug auf ihre anwendungstechnischen Eigenschaften verbesserungswürdig. So beträgt die Pendelhärte der strahlungsgehärteten Filme der Ausführungsbeispiele maximal 115 s.

Die EP-A-0 392 352 beschreibt wässrige Dispersionen von strahlungshärtbaren Polyurethanen aus

a) 1 Grammäquivalent NCO eines Polyisocyanates,

b) 0,1 bis 0,8 Grammäquivalenten OH eines Polyols mit einem Molekulargewicht zwischen 400 und 6000 g/mol,

c) 0 bis 0,8 Grammäquivalenten OH eines Polyols mit einem Molekulargewicht zwischen 62 und 399 g/mol,

d) 0 bis 0,4 Grammäquivalenten NH eines Polyamins mit mindestens zwei gegenüber Isocyanat reaktiven Aminogruppen,

e) 0 bis 0,4 Grammäquivalent OH eines Aminoalkohols mit mindestens einer gegenüber Isocyanat reaktiven Aminogruppe,

f) 0,05 bis 0,5 Grammäquivalent OH oder NH einer Verbindung mit Ionengruppen oder in Ionengruppen überführbaren Gruppen mit mindestens einer gegenüber Isocyanat reaktiven Hydroxyl- oder Aminogruppe,

g) 0 bis 0,2 Grammäquivalent OH eines monofunktionellen Polyetherols sowie

h) einer Verbindung mit mindestens einer ethylenisch ungesättigten Gruppe und mindestens einer Hydroxylgruppe,

mit den Maßgaben, dass (i) die Summe der OH- und NH-Grammäquivalente zwischen 0,9 und 1,2 liegt, (ii) die Komponenten unter a) bis h) in Form von Einzelkomponenten oder Gemischen vorliegen können, und (iii) die ethylenisch ungesättigte Komponente h) in Mengen von 0,02 bis 0,08 Grammäquivalent OH eingesetzt wird. Der Gehalt an polymerisierbaren, ethylenisch ungesättigten Gruppen pro 1 000 g Polyurethan ist somit sehr gering und beträgt maximal 0,166 mol/kg.

Die DE-A-195 25 489 beschreibt Polyesteracrylaturethan-Dispersionen auf Basis von hydroxylgruppenhaltigen Polyesteracrylatpräpolymeren. Die Herstellung dieser Dispersionen erfolgt durch Polyaddition von

a) 40 bis 90 Gew.-% einem oder mehreren hydroxylgruppenhaltigen Polyesteracrylatpräpolymeren mit einem OH-Gehalt von 40 bis 120 mg KOH/g und

b) 0,1 bis 20 Gew.-% einer oder mehrerer mono- und/oder difunktioneller gegenüber Isocyanatgruppen reaktiven Verbindungen, die kationische, anionische und/oder durch Ethereinheiten dispergierend wirkende Gruppen enthalten mit

c) 10 bis 50 Gew.-% einem oder mehreren Polyisocyanaten sowie anschließende Umsetzung mit

d) 0,1 bis 10 Gew.-% einem oder mehreren Di- und/oder Polyaminen.

Die mit diesen Dispersionen erhaltenen Beschichtungen sind im Hinblick auf ihre anwendungstechnischen Eigenschaften verbesserungswürdig. So weisen die noch nicht strahlungsgehärteten Filme eine zu geringe Pendelhärte auf, d. h. unter mechanischer Belastung haften die beschichteten Substrate aneinander und an anderen unbeschichteten Oberflächen und bei einer anschließenden Trennung der Substrate können Oberflächenschäden zurückbleiben. Dies ist insbesondere von Nachteil, wenn die Dispersionen, wie zuvor beschrieben, zur Beschichtung von Oberflächen eingesetzt werden, die bei der Strahlungshärtung schlecht zugängige Schattenbereiche aufweisen. Auch die gehärteten Filme sind in Bezug auf ihre mechanischen Eigenschaften, insbesondere einer guten Oberflächenhärte bei gleichzeitiger Flexibilität des Films, verbesserungswürdig.

In keinem der zuvor genannten Dokumente sind härtbare Polyurethanpolymerisate beschrieben, bei denen das Molverhältnis von eingebauten isocyanatgruppenhaltigen Komponenten zu Komponenten mit gegenüber Isocyanatgruppen reaktiven Gruppen so gewählt ist, dass letztere nur zu maximal 90 % umgesetzt werden.

Der vorliegenden Erfindung liegt die Aufgabe zugrunde, ein härtbares Polyurethanpolymerisat zur Verfügung zu stellen, welches sich zur Herstellung wässriger Polymerdispersionen mit guten anwendungstechnischen Eigenschaften eignet.

Überraschenderweise wurde nun gefunden, dass die Aufgabe durch ein härtbares Polyurethanpolymerisat gelöst wird, bei dem das Verhältnis von Isocyanatgruppen-Äquivalenten der eingebauten isocyanatgruppenhaltigen Komponenten zu Äquivalenten von gegenüber Isocyanatgruppen reaktiven Gruppen der Komponenten mit aktiven wasserstoffatomen in einem Bereich von etwa 0,4:1 bis 0,9:1 liegt.

Gegenstand der vorliegenden Erfindung ist daher ein härtbares Polyurethanpolymerisat, welches

A) 10 bis 60 Gew.-%, bezogen auf das Gesamtgewicht der Komponenten A) bis F), wenigstens eines hydroxylgruppenhaltigen Präpolymers mit mindestens einer thermisch oder photochemisch polymerisierbaren $\alpha,\beta$-ethyle-

nisch ungesättigten Doppelbindung,

B) 0,1 bis 30 Gew.-%, bezogen auf das Gesamtgewicht der Komponenten A) bis F), wenigstens einer Verbindung mit mindestens einer gegenüber Isocyanatgruppen reaktiven Hydroxyl- und/oder primären oder sekundären Aminogruppe und zusätzlich wenigstens einer polaren funktionellen Gruppe pro Molekül,

C) 0,1 bis 30 Gew.-%, bezogen auf das Gesamtgewicht der Komponenten A) bis F), wenigstens einer Verbindung, die ausgewählt ist unter Diaminen, Polyaminen und Mischungen davon,

D) 0 bis 10 Gew.-%, bezogen auf das Gesamtgewicht der Komponenten A) bis F), wenigstens einer weiteren von A), B), C) und E) verschiedenen Verbindung mit mindestens zwei gegenüber Isocyanatgruppen reaktiven Gruppen, wobei es sich um Hydroxylgruppen und Mischungen von Hydroxylgruppen mit primären und/oder sekundären Aminogruppen handelt,

E) 0 bis 20 Gew.-%, bezogen auf das Gesamtgewicht der Komponenten A) bis F), wenigstens einer Verbindung mit einer gegenüber Isocyanatgruppen reaktiven Gruppe,

F) 10 bis 65 Gew.-%, bezogen auf das Gesamtgewicht der Komponenten A) bis F), wenigstens einer Verbindung mit mindestens zwei Isocyanatgruppen,

einpolymerisiert enthält, und die Salze davon, das dadurch gekennzeichnet ist, dass das Verhältnis von Isocyanatgruppen-Äquivalenten der Komponente F) zu Äquivalenten von gegenüber Isocyanatgruppen reaktiven Gruppen der Komponenten A) bis E) in einem Bereich von 0,4:1 bis 0,9:1 liegt.

Das Verhältnis von Isocyanatgruppen-Äquivalenten der Komponente F) zu Äquivalenten von gegenüber Isocyanatgruppen reaktiven Gruppen der Komponenten A) bis E) liegt vorzugsweise in einem Bereich von etwa 0,45:1 bis 0,8:1.

Die Summe der Hydroxylzahlen der Komponenten A) und D) liegt vorzugsweise in einem Bereich von etwa 40 bis 300 mg KOH/g. Dabei können die Hydroxylzahlen der Komponenten A) und D) der erfindungsgemäßen Polymerisate z. B. in einem Bereich von etwa 40 bis 120 mg KOH/g liegen. Vorzugsweise liegt die Summe der Hydroxylzahlen der Komponenten A) und D) in einem Bereich von 121 bis 300 mg KOH/g, besonders bevorzugt 125 bis 220 mg KOH/g, insbesondere 130 bis 200 mg KOH/g.

Gewünschtenfalls kann auf den Einsatz einer Komponente D) in den erfindungsgemäßen Polymerisaten verzichtet werden. Vorzugsweise liegt die Hydroxylzahl des Präpolymers A) dann in einem Bereich von etwa 121 bis 300 mg KOH/g, bevorzugt etwa 123 bis 220 mg KOH/g, insbesondere etwa 125 bis 200 mg KOH/g. Nach einer möglichen Ausführungsform können die erfindungsgemäßen Polymerisate jedoch auch ein Präpolymer A) mit einer Hydroxylzahl von mindestens 121 mg KOH/g und zusätzlich eine Komponente D) eingebaut enthalten.

Der Gehalt an polymerisierbaren, $\alpha,\beta$-ethylenisch ungesättigten Doppelbindungen liegt im Allgemeinen in einem Bereich von etwa 1,0 bis 4,0 mol pro 1000 g Polymerisat, bevorzugt etwa 1,1 bis 3,8 mol, insbesondere 1,2 bis 3,5 mol pro 1 000 g Polymerisat.

Der Gehalt an polaren funktionellen Gruppen der erfindungsgemäßen Polymerisate liegt im Allgemeinen in einem Bereich von etwa 0,8 bis 3,5 Gew.-%, bevorzugt von 0,9 bis 3,3 Gew.-%. Polymerisate mit einem Gehalt an polaren funktionellen Gruppen im Bereich von etwa 1,3 bis 3,5 Gew.-% sind im Allgemeinen selbstdispergierbar und können gewünschtenfalls auch ohne den Zusatz von Dispergierhilfsmitteln zu den erfindungsgemäßen Polymerdispersionen formuliert werden.

Der K-Wert des Präpolymers vor der Dispergierung und Kettenverlängerung bestimmt nach E. Fikentscher, Cellulose-Chemie 13 (1932), S. 58-64, an einer 1%igen Lösung in Dimethylformamid, liegt in einem Bereich von etwa 20 bis 70, bevorzugt 30 bis 60, insbesondere 45 bis 55.

Hydroxylgruppenhaltige Präpolymere A) mit mindestens einer thermisch oder photochemisch radikalisch polymerisierbaren $\alpha,\beta$-ethylenisch ungesättigten Doppelbindung sind vorzugsweise ausgewählt unter Polyesteracrylaten, Polyetheracrylaten, Polyurethanacrylaten, Epoxyacrylaten, und Mischungen davon.

Geeignete Polyesteracrylate sind z. B. die Polykondensationsprodukte von $\alpha,\beta$-ethylenisch ungesättigten Mono- und/oder Dicarbonsäuren und deren Anhydriden mit Polyesterpolyolen. Als $\alpha,\beta$-ethylenisch ungesättigte Mono- und/oder Dicarbonsäuren und deren Anhydride können z. B. Acrylsäure, Methacrylsäure, Fumarsäure, Maleinsäure, Maleinsäureanhydrid, Crotonsäure, Itaconsäure, etc eingesetzt werden. Bevorzugt werden Acrylsäure und Methacrylsäure eingesetzt. Geeignete Polyesterole sind lineare und verzweigte Polymere mit endständigen OH-Gruppen, z. B. solche mit mindestens zwei OH-Endgruppen. Die Polyesterole lassen sich in einfacher Weise durch Veresterung von aliphatischen, cycloaliphatischen und aromatischen Di-, Tri- und/oder Polycarbonsäuren mit Di-, Triund/oder Polyolen herstellen. Geeignete Carbonsäuren sind z. B. Dicarbonsäuren mit 2 bis 20 Kohlenstoffatomen, vorzugsweise 4 bis

15 Kohlenstoffatomen, beispielsweise Malonsäure, Bernsteinsäure, Adipinsäure, Glutarsäure, Pimelinsäure, Korksäure, Sebacinsäure, Dodecandisäure, Phthalsäure, Terephthalsäure, Isophthalsäure, Cyclohexandicarbonsäure etc. Geeignet sind auch Sulfobernsteinsäure und Sulfoisophthalsäure. Die Dicarbonsäuren können einzeln oder als Gemische eingesetzt werden. Geeignete Diole sind z. B. Glykole, bevorzugt Glykole mit 2 bis 25 Kohlenstoffatomen. Beispiele für geeignete Glykole sind z. B. 1,2-Ethandiol, 1,3-Propandiol, 1,4-Butandiol, 1,5-Pentandiol, 1,6-Hexandiol, 1,10-Decandiol, Diethylenglykol, 2,2,4-Trimethylpentandiol-1,5, 2,2-Dimethylpropandiol-1,3, 1,4-Cyclohexandiol, 1,4-Dimethylolcyclohexan, 1,6-Dimethylolcyclohexan und ethoxilierte/propoxilierte Produkte des 2,2-Bis- (4-hydroxyphenyl)-propan (Bisphenol-A), etc. Geeignete Triole und Polyole weisen z. B. 3 bis 25, bevorzugt 3 bis 18 Kohlenstoffatome auf. Dazu zählen z. B. Glycerin, Trimethylolpropan, Erythrit, Pentaerythrit, Sorbit und deren Alkoxilate etc. Geeignete Polyesterole lassen sich ebenfalls durch Polymerisation von Lactonen, z. B. Lactonen mit 3 bis 20 Kohlenstoffatomen, herstellen. Als Lactone für die Herstellung der Polyesterole eignen sich z. B. $\alpha,\alpha$-Dimethyl-$\beta$-propiolacton, $\gamma$-Butyrolacton, $\varepsilon$-Caprolacton, etc.

Weitere geeignete Polyesteracrylate sind Kondensationsprodukte auf Basis von Hydroxylgruppen aufweisenden Estern der Acrylsäure und/oder Methacrylsäure mit mindestens zweiwertigen Alkoholen. Dazu zählen z. B. 2-Hydroxyethylacrylat, 2-Hydroxy-ethylmethacrylat, 2-Hydroxypropylacrylat, 2-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, Di(meth)acrylsäureester des 1,1,1-Trimethylolpropans oder des Glycerins. Diese Hydroxylgruppen aufweisenden Ester können mit Polyesterolen mit endständigen Carboxylgruppen oder den diese Polyesterole bildenden Dicarbonsäuren und Glykolen zu Polyesteracrylaten polykondensiert werden.

Geeignete Polyetheracrylate A) sind z. B. die Polykondensationsprodukte der zuvor genannten $\alpha,\beta$-ethylenisch ungesättigten Monound/oder Dicarbonsäuren und deren Anhydride mit Polyetherolen. Als Polyetherole können dabei lineare oder verzweigte endständige Hydroxylgruppen aufweisende Substanzen eingesetzt werden, die Etherbindungen enthalten und ein Molekulargewicht im Bereich von z. B. etwa 300 bis 10 000, vorzugsweise von 400 bis 5000, besitzen. Geeignete Polyetherole können leicht durch Polymerisation von cyclischen Ethern, wie Tetrahydrofuran oder durch Umsetzung von einem oder mehreren Alkylenoxiden mit 2 bis 4 Kohlenstoffatomen im Alkylrest mit einem Startermolekül, das zwei aktive Wasserstoffatome im Alkylenrest gebunden enthält, hergestellt werden. Als Alkylenoxide seien beispielsweise Ethylenoxid, 1,2-Propylenoxid, Epichlorhydrin, 1,2- und 2,3-Butylenoxid genannt. Die Alkylenoxide können einzeln, alternierend nacheinander oder als Mischung eingesetzt werden. Als Startermolekül kommen z. B. Wasser, die zuvor genannten Glykole, Polyesterole, Triole und Polyole, Amine, wie Ethylendiamin, Hexamethylendiamin und 4,4'-Diaminodiphenylmethan sowie Aminoalkohole, wie Ethanolamin, in Betracht. Ebenso wie die Polyesterole können auch die Polyetherole allein oder in Mischungen verwendet werden.

Geeignete Polyurethanacrylate A) sind z. B. die Polyadditionsprodukte der im Folgenden als Komponente F) beschriebenen Polyisocyanate mit den zuvor beschriebenen Hydroxylgruppen aufweisenden Estern aus Acryl- und/ oder Methacrylsäure mit mindestens zweiwertigen Alkoholen. Als Polyisocyanate werden dabei bevorzugt Diisocyanate, wie z. B. 2,4- und 2,6-Toluylendiisocyanat (TDI) und Isomerengemische davon, Tetramethylxylylendiisocyanat (TMXDI), Tetramethylendiisocyanat, Hexamethylendiisocyanat (HDI) und dessen Trimere, Isophorondiisocyanat (IPDI), Trimethylhexamethylendiisocyanat, 1,3-Cyclohexandiisocyanat und dessen Trimere, Dicyclohexylmethandiisocyanat ($H_{12}$MDI), Xylendiisocyanat (XDI) und Diphenylmethandiisocyanat (MDI) eingesetzt. Bevorzugte Hydroxylgruppen aufweisende Ester der Acrylsäure und/oder Methacrylsäure sind die zuvor genannten Hydroxyalkyl- (meth)acrylate, bevorzugt Hydroxymethylacrylat, Hydroxypropylacrylat und Hydroxyethylmethacrylat.

Geeignete Epoxyacrylate A) sind z. B. die Umsetzungsprodukte von Verbindungen, die wenigstens eine Epoxidgruppe aufweisen, mit Verbindungen, die wenigstens eine $\alpha,\beta$-ethylenisch ungesättigte Doppelbindung und wenigstens eine gegenüber Epoxidgruppen reaktive Gruppe pro Molekül aufweisen. Letztere sind vorzugsweise ausgewählt unter $\alpha,\beta$-ethylenisch ungesättigten Mono- und Dicarbonsäuren und deren Anhydriden, insbesondere Acrylsäure, Methacrylsäure, Fumarsäure, Maleinsäure, Maleinsäureanhydrid, Crotonsäure und Itaconsäure. Besonders bevorzugt werden Acrylsäure und/oder Methacrylsäure eingesetzt. Bevorzugt ist die Epoxidgruppen-haltige Verbindung ausgewählt unter Glycidylethern, Glycidylestern, epoxidierten Olefinen, epoxidierten cyclischen Harnstoffen, epoxidierten Triazinen und Mischungen davon. Die Herstellung geeigneter Glycidylether erfolgt z. B. durch Umsetzung wenigstens eines aliphatischen, cycloaliphatischen oder aromatischen, ein-, zwei- oder mehrwertigen Alkohols mit wenigstens einer Epoxidverbindung, die in $\alpha$-Position zur Epoxidgruppe eine geeignete Abgangsgruppe, wie z. B. Halogen, aufweist. Vorzugsweise wird als Epoxidverbindung zur Glycidetherherstellung, wie auch zur Glycidesterherstellung und zur Epoxidierung von Harnstoffen und Triazinen, Epichlorhydrin eingesetzt. Vorzugsweise wird als Alkoholkomponente zur Glycidetherherstellung wenigstens eines der zuvor genannten Di-, Tri- und/oder Polyole eingesetzt, insbesondere 1,4-Butandiol, 1,4-Cyclohexandiol, 1,4-Dimethylolcyclohexan, 1,6-Dimethylolcyclohexan, Bisphenol A, hydriertes Bisphenol A und Mischungen davon.

Bei der Umsetzung von zwei- oder mehrwertigen Alkoholen und Epoxidverbindungen, die in $\alpha$-Position zur Epoxidgruppe eine Abgangsgruppe aufweisen, resultieren je nach Molmengenverhältnis von Epoxidverbindung zu

Alkoholkomponente Glycidether oder, mit zunehmender Menge an Alkohol, höhermolekulare, hydroxylgruppenhaltige Di- oder Polyepoxide. Im Allgemeinen eignen sich sowohl Glycidether als auch höhermolekulare Produkte zur Herstellung von erfindungsgemäß einsetzbaren Epoxyacrylaten A). Bevorzugte Glycidylester zur Herstellung von Epoxyacrylaten A) sind z. B. die Umsetzungsprodukte von aliphatischen, cycloaliphatischen oder aromatischen, ein-, zwei- oder mehrwertigen Carbonsäuren mit wenigstens einer Epoxidverbindung, die in $\alpha$-Position zur Epoxidgruppe eine Abgangsgruppe aufweisen. Vorzugsweise werden als Carbonsäurekomponente zur Glycidesterherstellung Dicarbonsäuren, wie z. B. dimerisierte Fettsäuren eingesetzt. Ein bevorzugter Glycidylester zur Herstellung von erfindungsgemäß einsetzbaren Epoxyacrylaten

A) ist Bis-epoxycyclohexylmethylcarboxylat. Bevorzugte Epoxidgruppen aufweisende Verbindungen zur Herstellung von erfindungsgemäß einsetzbaren Epoxyacrylaten A) sind weiterhin aromatische Glycidylamine, insbesondere das Triglycidyladdukt von p-Aminophenol und das Tetraglycidylamin von Methylendianilin, heterocyclische Glycidylimide und Glycidylamide, insbesondere Triglycidylisocyanurat, und Epoxyharze auf Hydantoinbasis etc. Geeignete Epoxidgruppen-haltige Verbindungen zur Herstellung der Epoxyacrylate A) sind dem Fachmann bekannt und kommerziell erhältlich. Dazu zählen z. B. die Araldit®-Marken der Fa. Ciba.

Geeignete Epoxyacrylate A) sind weiterhin Epoxyacrylate auf Basis von Epoxynovolacen, epoxidierten Ölen, wie Soja- oder Leinöl, etc.

Bevorzugte Epoxyacrylate A) sind ausgewählt unter den Umsetzungsprodukten von 1,4-Butandioldiglycidether, 1,4-Cyclohexandioldiglycidether, 1,4- und 1,6-Dimethylolcyclohexandiglycidether, Bis-epoxycyclohexylmethylcarboxylat, Triglycidylisocyanurat und Bisphenol A-diglycidether mit Acrylsäure und/oder Methacrylsäure sowie Mischungen dieser Umsetzungsprodukte. Besonders bevorzugt werden als Epoxyacrylate A) die Umsetzungsprodukte aus einem Mol eines Bisphenol A-diglycidethers (z. B. Epikote® 828 der Fa. Shell) mit zwei Molen Acrylsäure oder Methacrylsäure eingesetzt. Die Hydroxylzahl von Epikote® 828-diacrylat beträgt dabei etwa 215 mg KOH/g. Besonders bevorzugt werden auch Mischungen von Epoxyacrylaten A) eingesetzt, die wenigstens ein Epoxyacrylat auf Basis eines Bisphenol A-diglycidethers enthalten.

Nach einer bevorzugten Ausführungsform handelt es sich bei dem Präpolymer A) um ein Reaktionsprodukt oder eine Mischung aus

a) wenigstens einem Polyesteracrylat und/oder Polyetheracrylat und/oder Polyurethanacrylat und

b) wenigstens einem Epoxyacrylat.

Polyesteracrylate, Polyetheracrylate, Polyurethanacrylate und Epoxyacrylate und deren Herstellung werden z. B. in N. S. Allen, M. A. Johnson, P. Old-ring (Hrsg.) und M. S. Salim , Chemistry & Technology of UV&EB- Curing Formulations for Coatings, Inks & Paints, Vol. 2, SITA Technology, London 1991, beschrieben.

Das erfindungsgemäße Polyurethanpolymerisat enthält die Komponente B), die mindestens eine gegenüber Isocyanatgruppen reaktive Hydroxyl- und/oder Aminogruppe und zusätzlich wenigstens eine polare funktionelle Gruppe aufweist, im Allgemeinen in einem Anteil von etwa 0,1 bis 30 Gew.-%, bevorzugt 1,0 bis 25 Gew.-%, insbesondere 2,0 bis 20 Gew.-%, bezogen auf das Gesamtgewicht der Komponenten A) bis F), einpolymerisiert. Die Komponente B) ist dabei ausgewählt unter Substanzen, die wenigstens eine polare funktionelle Gruppe, ausgewählt unter ionogenen und/oder ionischen Gruppen, sowie Polyethergruppen aufweisen.

Diese Gruppen begünstigen im Allgemeinen vorteilhafterweise die Dispergierung der Polyurethane in Wasser. Bei den ionogenen bzw. ionischen Gruppen handelt es sich vorzugsweise um Carbonsäuregruppen, Phosphonsäuregruppen, Phosphorsäuregruppen und/oder Sulfonsäuregruppen und/oder stickstoffhaltige Gruppen (Amine) bzw. Carboxylatgruppen und/oder Sulfonatgruppen und/oder quaternisierte oder protonierte Gruppen. Als Komponente B) können daher z. B. Hydroxycarbonsäuren, wie Hydroxyessigsäure (Glykolsäure), Hydroxypropionsäure (Milchsäure), Hydroxybernsteinsäure (Äpfelsäure) und Salze davon, bevorzugt Dimethylolpropansäure und deren Alkalimetall- und Ammoniumsalze, eingesetzt werden.

Geeignete Verbindungen B), die wenigstens eine Sulfonsäuregruppe oder ein Sulfonat als polare funktionelle Gruppe aufweisen, sind z. B. die Diesterdiole oder Polyesterdiole von Dicarbonsäuren, die zusätzlich wenigstens eine Sulfonsäuregruppe oder Metallsulfonatgruppe aufweisen, mit den zuvor als Edukte der Präpolymere A) genannten Diolen. Als Dicarbonsäuren können dabei z. B. Sulfobernsteinsäure, 4-Sulfophthalsäure, 5-Sulfoisophthalsäure, Sulfoterephthalsäure, 4-Sulfonaphthalin-2,7-dicarbonsäure, 5-(4-Sulfophenoxy)terephthalsäure oder die entsprechenden Metallsulfonate eingesetzt werden. Vorzugsweise werden die Alkalisalze der zuvor genannten Sulfodicarbonsäuren, insbesondere die Natrium- und Kaliumsalze, eingesetzt. Besonders bevorzugt sind 5-Natriumsulfoisophthalsäure, 5-Kaliumsulfoisophthalsäure, Natriumsulfoterephthalsäure und Kaliumsulfoterephthalsäure. Weitere geeignete Verbindungen B), die wenigstens eine Sulfonsäure- oder Sulfonatgruppe aufweisen, sind entsprechend substituierte geradkettige oder verzweigte aliphatische, cycloaliphatische oder aromatische Diole. Dazu zählen z. B. 2-Sulfo-1,4-butandiol, 2,5-Dimethyl-3-sulfo-2,5-hexandiol und deren Natrium- und Kaliumsalze.

Brauchbar sind auch Verbindungen B) der Formeln

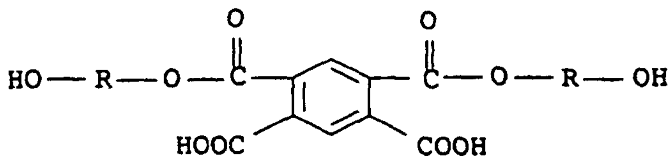

und/oder

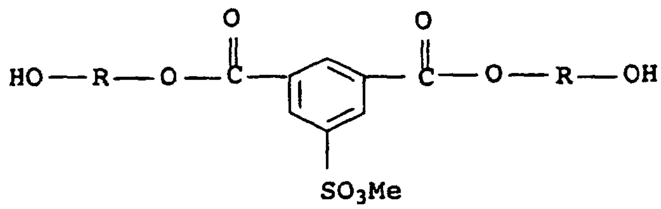

worin R jeweils für eine $C_2$-$C_{18}$-Alkylengruppe steht und Me für Na oder K steht.

Als Komponente B) brauchbar sind auch Verbindungen der Formeln

$$H_2N(CH_2)_n\text{-}NH\text{-}(CH_2)_m\text{-}COO^-M^+$$

$$H_2N(CH_2)_n\text{-}NH\text{-}(CH_2)_m\text{-}SO_3^-M^+$$

worin m und n unabhängig voneinander für eine ganze Zahl von 1 bis 8, insbesondere 1 bis 6, stehen und M für Wasserstoff, Li, Na, K oder Ammonium steht. Bevorzugt stehen bei den Verbindungen m und n für 2.

Wenn man als Komponente B) Verbindungen mit stickstoffhaltigen Gruppen verwendet, erhält man kationische Polyurethane. Brauchbare Komponenten B) sind z. B. Verbindungen der allgemeinen Formeln

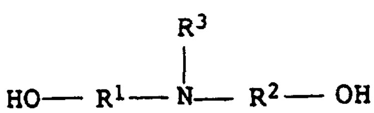 , 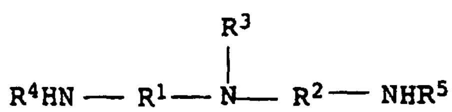 ,

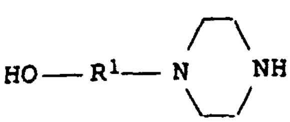 , 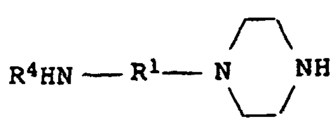 ,

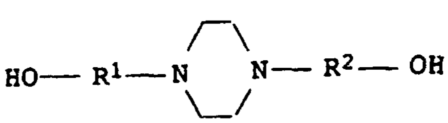 , 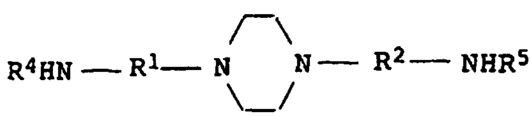 ,

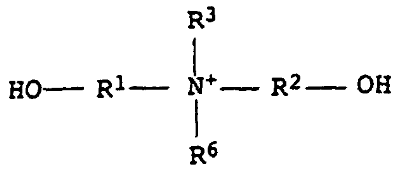 , 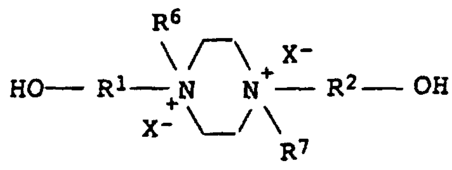

worin

$R^1$ und $R^2$, die gleich oder verschieden sein können, für $C_2$-$C_8$-Alkylen stehen,
$R^3$, $R^6$ und $R^7$, die gleich oder verschieden sein können, für $C_1$-$C_6$-Alkyl, Phenyl oder Phenyl-$C_1$-$C_4$-alkyl stehen,
$R^4$ und $R^5$, die gleich oder verschieden sein können, für H oder $C_1$-$C_6$-Alkyl stehen,
$X^-$ für ein Anion, bevorzugt für Chlorid, Bromid, Jodid, $C_1$-$C_6$-Alkylsulfat oder $SO_4^{2-}/_2$ steht.

Gemäß einer weiteren geeigneten Ausführungsform handelt es sich bei der Komponente (B) um ein Amin der Formel:

$$R^{10}HN\text{-}Y\text{-}SO_3H$$

worin

Y für o-, m- oder p-Phenylen oder geradkettiges oder verzweigtes $C_2$-$C_6$-Alkylen steht, das gegebenenfalls durch 1, 2 oder 3 Hydroxygruppen substituiert ist, und

$R^{10}$ für ein Wasserstoffatom, eine $C_1$-$C_{12}$-Alkylgruppe (vorzugsweise $C_1$-$C_{10}$- und insbesondere $C_1$-$C_6$-Alkylgruppe) oder eine $C_5$-$C_6$-Cycloalkylgruppe steht, wobei die Alkylgruppe oder die Cycloalkylgruppe gegebenenfalls durch 1, 2 oder 3 Hydroxygruppen, Carboxylgruppen oder Sulfonsäuregruppen substituiert sein kann.

Bevorzugt handelt es sich bei dem Amin der obigen Formel um Taurin, N-(1,1-Dimethyl-2-hydroxyethyl)-3-amino-2-hydroxypropansulfonsäure oder 2-Aminoethylaminoethansulfonsäure.

Gemäß einer weiteren geeigneten Ausführungsform handelt es sich bei dem Amin um eine übliche $\alpha$-, $\beta$- oder $\gamma$-Aminosäure, beispielsweise Glycin, Alanin, Valin, Leucin, Isoleucin, Phenylalanin, Tyrosin, Prolin, Hydroxyprolin, Serin, Threonin, Methionin, Cystein, Tryptophan, $\beta$-Alanin, Asparaginsäure oder Glutaminsäure.

Die Säuregruppen enthaltenden Polyurethane können durch Neutralisation (teilweise oder vollständig) in eine wasserdispergierbare Form überführt werden. Als Base für die Neutralisation können Alkalimetallbasen wie Natronlauge, Kalilauge, Natriumcarbonat, Natriumhydrogencarbonat, Kaliumcarbonat oder Kaliumhydrogencarbonat und Erdalkalimetallbasen wie Calciumhydroxid, Calciumoxid, Magnesiumhydroxid oder Magnesiumcarbonat sowie Ammoniak und Amine, wie Trimethylamin, Triethylamin, Triisopropylamin etc., verwendet werden. Die Neutralisation der Säuregruppen enthaltenden Polyurethane kann auch mit Hilfe von Mischungen mehrerer Basen vorgenommen werden, z. B. Mischungen aus einem Alkalihydroxid, wie Natronlauge und einem Amin, wie z. B. Triethanolamin, Triisopropanolamin etc. Die Neutralisation kann gewünschtenfalls partiell z. B. 10 bis 99 %, wie z. B. zu 20 bis 80 % oder vollständig, d. h. zu 100 % erfolgen.

Geladene kationische Gruppierungen lassen sich aus den vorliegenden tertiären Aminstickstoffatomen entweder durch Protonierung, z. B. mit Carbonsäuren wie Essigsäure, Propionsäure, Buttersäure und Milchsäure, oder durch Quaternisierung, z. B. mit Alkylierungsmitteln wie $C_1$- bis $C_4$-Alkylhalogeniden oder -sulfaten erzeugen. Beispiele solcher Alkylierungsmittel sind Ethylchlorid, Ethylbromid, Methylchlorid, Methylbromid, Dimethylsulfat und Diethylsulfat.

Die als Komponente B) geeigneten Verbindungen, die nur eine gegenüber Isocyanatgruppen reaktive Gruppe aufweisen, wirken als Abstoppmittel, die die Polyaddition unterbrechen. Sie können bei der Herstellung der erfindungsgemäßen Polymerisate gewünschtenfalls am Ende der Polyadditionsreaktion zugegeben werden, um gegebenenfalls noch vorhandene freie Isocyanatgruppen, zumindest teilweise, umzusetzen.

Bevorzugt werden als Komponente B) Verbindungen eingesetzt, die wenigstens zwei gegenüber Isocyanatgruppen reaktive Gruppen, wie z. B. Amino- und/oder Hydroxylgruppen und wenigstens eine weitere polare funktionelle Gruppe aufweisen.

Als Verbindungen B) können weiterhin die zuvor als Komponente der Präpolymere A) beschriebenen Polyetherole auf der Basis von cyclischen Ethern und Alkylenoxiden eingesetzt werden. Weiterhin sind auch α,ω-Diaminopolyether geeignet, die z. B. durch Umsetzung der Polyetherole mit Ammoniak erhältlich sind. Geeignete Verbindungen B) sind auch z. B. an einer Hydroxylgruppe alkoxiliertes Trimethylolpropan, wobei der Alkoxylatrest eine endständige Carboxylat- oder Sulfonatgruppe aufweist. Der Alkoxylatrest kann dabei z. B. Ethylenoxid, Propylenoxid und Mischungen davon eingebaut enthalten. Das Molekulargewicht dieser Verbindungen liegt in einem Bereich von etwa 500 bis 2 000. Sie sind z. B. als Tegomer®-Marken der Fa. Goldschmidt erhältlich.

Die Polyurethane enthalten als Komponente C) wenigstens eine Verbindung, die ausgewählt ist unter Diaminen, Polyaminen und Mischungen davon in einem Anteil von etwa 0,1 bis 30 Gew.-%, bevorzugt 0,5 bis 25 Gew.-%, insbesondere 1 bis 20 Gew.-%, bezogen auf das Gesamtgewicht der Komponenten A) bis F), einpolymerisiert. Die Komponente C) enthält keine polaren funktionellen Gruppen.

Geeignete Amine C) sind geradkettige und verzweigte, aliphatische und cycloaliphatische Amine mit im Allgemeinen etwa 2 bis 30, bevorzugt etwa 2 bis 20 Kohlenstoffatomen. Dazu zählen z. B. Ethylendiamin, 1,2-Diaminopropan, 1,3-Diaminopropan, 1,4-Diaminobutan, 1,5-Diaminopentan, 1,6-Diaminohexan, 1,7-Diaminoheptan, 1,8-Diaminooctan, 1,9-Diaminononan, 1,10-Diaminodecan, 1,11-Diaminoundecan, 1,12-Diaminododecan, Diethylentriamin, Triethylentetraamin, 4-Azaheptamethylendiamin, N,N'-Bis(3-aminopropyl)-butan-1,4-diamin, und Mischungen davon. Geeignete Polyamine C) weisen im Allgemeinen ein zahlenmittleres Molekulargewicht von etwa 400 bis 10 000, bevorzugt etwa 500 bis 8000 auf. Dazu zählen z. B. Polyamide mit endständigen, primären oder sekundären Aminogruppen, Polyalkylenimine, bevorzugt Polyethylenimine und durch Hydrolyse von Poly-N-vinylamiden, wie z. B. Poly-N-vinylacetamid, erhaltene Vinylamine sowie die zuvor genannten α,ω-Diamine auf der Basis von aminierten Polyalkylenoxiden. Copolymerisate, die α,β-ethylenisch ungesättigte Monomere mit entsprechenden funktionellen Gruppen, z. B. Aminomethylacrylat, Aminoethylacrylat, (N-Methyl)-aminoethylacrylat, (N-Methyl)-aminoethylmethacrylat etc., einpolymerisiert enthalten, eignen sich auch zur Einführung photochemisch oder radikalisch härtbarer Doppelbindungen in die Polyurethane.

Die Polyurethane können zur weiteren Optimierung der Polymereigenschaften gegebenenfalls als Komponente D) wenigstens eine weitere Verbindung mit mindestens zwei gegenüber Isocyanatgruppen reaktiven Gruppen in einem Anteil von 0,01 bis 10 Gew.-%, bevorzugt etwa 0,1 bis 5 Gew.-%, bezogen auf das Gesamtgewicht der Komponenten A) bis F), einpolymerisiert enthalten.

Als Komponente D) können z. B. Polyole eingesetzt werden, deren Molekulargewicht im Allgemeinen in einem Bereich von etwa 62 bis 399 g/mol liegt. Dazu zählen z. B. Diole mit 2 bis 18 Kohlenstoffatomen, vorzugsweise 2 bis 10 C-Atomen, wie 1,2-Ethandiol, 1,3-Propandiol, 1,4-Butandiol, 1,6-Hexandiol, 1,5-Pentandiol, 1,10-Decandiol, 2-Methyl-1,3-propandiol, 2-Methyl-2-butyl-1,3-propandiol, 2,2-Dimethyl-1,3-propandiol, 2,2-Dimethyl-1,4-butandiol, 2-Ethyl-2-butyl-1,3-propandiol, Hydroxypivalinsäureneopentylglykolester, Diethylenglykol und Triethylenglykol. Geeignete Triole und höherwertige Polyole sind Verbindungen mit 3 bis 25, bevorzugt 3 bis 18, insbesondere bevorzugt 3 bis 6 C-Atomen. Beispiele für brauchbare Triole sind Glycerin oder Trimethylolpropan. Als höherwertige Polyole lassen sich beispielsweise Erythrit, Pentaerythrit und Sorbit einsetzen. Geeignet sind auch niedermolekulare Umsetzungsprodukte der Polyole, z. B. von Trimethylolpropan mit Alkylenoxiden, wie Ethylenoxid und/oder Propylenoxid. Diese niedermolekularen Polyole können einzeln oder als Gemische verwendet werden.

Geeignete Komponenten D) sind weiterhin Aminoalkohole mit 2 bis 16, vorzugsweise 3 bis 6 Kohlenstoffatomen, wie z. B. Monoethanolamin, Methylisopropanolamin, Ethylisopropanolamin, Methylethanolamin, 3-Aminopropanol, 1-Ethylaminobutan-2-ol, Methylendiethanolamin, 4-Methyl-4-aminopentan-2-ol und N-(2-Hydroxyethyl)-anilin und Mischungen davon.

Als Komponente D) können auch höhermolekulare Polyole mit einem zahlenmittleren Molekulargewicht im Bereich von etwa 400 bis 6 000 g/mol, bevorzugt 500 bis 4 000 g/mol, eingesetzt werden. Dazu zählen z. B. die zuvor bei der Komponente A) beschriebenen Polyesterole auf Basis von aliphatischen, cycloaliphatischen und/oder aromatischen Di-, Tri- und/oder Polycarbonsäuren mit Di-, Tri- und/oder Polyolen sowie die Polyesterole auf Lacton-Basis. Dazu zählen weiterhin die ebenfalls zuvor bei der Komponente A) beschriebenen Polyetherole, die durch Polymerisation von cyclischen Ethern oder durch Umsetzung von Alkylenoxiden mit einem Startermolekül erhältlich sind. Dazu zählen weiterhin auch übliche, dem Fachmann bekannte Polycarbonate mit endständigen Hydroxylgruppen, die durch Umsetzung der zuvor beschriebenen Diole oder auch von Bisphenolen, wie Bisphenol A, mit Phosgen oder Kohlensäurediestern erhältlich sind. Geeignet sind auch α,ω-Polyamidole, α,ω-Polymethyl(meth)acrylatdiole und/oder α,ω-Polybutyl(meth)acrylatdiole, wie z. B. MD-1000 und BD-1000 der Fa. Goldschmidt.

Die zuvor genannten Komponenten D) können einzeln oder als Gemische eingesetzt werden.

Die Polyurethane können als Komponente E) wenigstens eine weitere Verbindung mit nur einer gegenüber Isocyanatgruppen reaktiven Gruppe aufweisen. Bei dieser Gruppe kann es sich um eine Hydroxyl- oder eine primäre oder sekundäre Aminogruppe handeln. Die erfindungsgemäßen Polyurethane können die Komponente E) in einer Menge von 0,01 bis 10 Gew.-%, bevorzugt 0,1 bis 5 Gew.-%, bezogen auf die Gesamtmenge der Komponenten A) bis F), einpolymerisiert enthalten.

Als Komponente E) können z. B. monofunktionelle Alkohole, wie z. B. Methanol, Ethanol, n-Propanol, Isopropanol etc., eingesetzt werden. Geeignete Komponenten E) sind auch Amine mit einer primären oder sekundären Aminogruppe, wie z. B. Methylamin, Ethylamin, n-Propylamin, Isopropylamin, Dimethylamin, Diethylamin, Di-n-propylamin, Diisopropylamin etc.

Bei der Komponente E) kann es sich auch um einwertige Polyetheralkohole mit einem zahlenmittleren Molgewicht im Bereich von etwa 500 bis 10 000 g/mol, vorzugsweise von 1000 bis 5000 g/mol, handeln. Einwertige Polyetheralkohole sind durch Alkoxylierung von einwertigen Startermolekülen, wie beispielsweise Methanol, Ethanol oder n-Butanol, erhältlich, wobei als Alkoxylierungsmittel Ethylenoxid oder Gemische von Ethylenoxid mit anderen Alkylenoxiden, besonders Propylenoxid, eingesetzt werden.

Durch diese Komponente E) können in den Polyurethanen somit, gegebenenfalls in end- und/oder seitenständig angeordneten Polyetherketten, vorliegende Polyethylenoxidsegmente eingebaut sein, die im Polyurethan neben den ionischen Gruppen den hydrophilen Charakter beeinflussen.

Die Verbindungen der genannten Art mit innerhalb von end- und/oder seitenständig angeordneten Polyetherketten vorliegenden Polyethylenoxideinheiten werden in solchen Mengen eingesetzt, dass in den Polyurethan-Dispersionen 0 bis 10 Gew.-%, vorzugsweise 0 bis 5 Gew.-%, innerhalb von end- und/oder seitenständig angeordneten Polyetherketten eingebauten Polyethylenoxideinheiten in den Polyurethanen vorliegen können. Die Gesamtmenge der hydrophilen Struktureinheiten (ionische Gruppen und Ethylenoxideinheiten der zuletzt genannten Art) wird dabei im Allgemeinen so gewählt, dass die Dispergierbarkeit der Polyurethane in Wasser gewährleistet ist.

Die Polyurethane umfassen als Komponente F) wenigstens ein Polyisocyanat in einem Anteil von etwa 10 bis 65 Gew.-%, bevorzugt etwa 15 bis 60 Gew.-%, bezogen auf das Gesamtgewicht der Komponenten A) bis F), einpolymerisiert. Geeignete Polyisocyanate F) sind ausgewählt unter Verbindungen mit 2 bis 5 Isocyanatgruppen, Isocyanatpräpolymeren mit mittleren Anzahl von 2 bis 5 Isocyanatgruppen, und Mischungen davon. Dazu zählen z. B. aliphatische, cycloaliphatische und aromatische Di-, Tri- und Polyisocyanate. Geeignete Diisocyanate F) sind z. B. Tetramethylendiisocyanat, Hexamethylendiisocyanat, 2,3,3-Trimethylhexamethylendiisocyanat, 1,4-Cyclohexylendiisocyanat, Isophorondiisocyanat, 1,4-Phenylendiisocyanat, 2,4- und 2,6-Toluylendiisocyanat und deren Isomerengemische (z. B. 80 % 2,4- und 20 % 2,6-Isomer), 1,5-Naphthylendiisocyanat, 2,4- und 4,4'-Diphenylmethandiisocyanat. Ein geeignetes Triisocyanat ist z. B. Triphenylmethan-4,4',4''-triisocyanat. Weiterhin geeignet sind Isocyanatpräpolymere und Polyisocyanate, die durch Addition der zuvor genannten Isocyanate an polyfunktionelle hydroxyl- oder amingruppenhaltige Verbindungen erhältlich sind. Weiterhin geeignet sind Polyisocyanate, die durch Biuret- oder Isocyanuratbildung entstehen. Bevorzugt werden Hexamethylendiisocyanat, trimerisiertes Hexamethylendiisocyanat, Isophorondiisocyanat, 2,4-Toluylendiisocyanat, 2,6-Toluylendiisocyanat, und Mischungen davon, eingesetzt.

Ein weiterer Gegenstand der Erfindung sind Polymerdispersionen, die wenigstens eines der zuvor beschriebenen Polymerisate in dispergierter Form enthalten. Die Herstellung der erfindungsgemäßen Polyurethandispersionen erfolgt nach üblichen, dem Fachmann bekannten Verfahren. Diese sind z. B. in Ullmann's Encyclopedia of Industrial Chemistry, 5. Aufl., Bd. A 21, VCH Weinheim, (1992), S. 678-680 beschrieben. Dazu zählt z. B. die Spontandispersion von Polyurethanionomeren nach dem Acetonverfahren, Präpolymer-Mischverfahren, Schmelzemulsionsverfahren, etc. Dazu zählt weiterhin das Ketimin- und Ketazin-Verfahren und die Dispersion von Precursoren, bei dem hydrophile Oligomere dispergiert werden.

Zur Herstellung der erfindungsgemäßen härtbaren Polyurethanpolymerisate können z. B. die Komponenten A), B), F) und gegebenenfalls D) und/oder E) zunächst in der Schmelze oder in Gegenwart eines inerten, mit Wasser mischbaren Lösungsmittels zu einem isocyanatgruppenhaltigen Polyurethanpräpolymer umgesetzt werden. Bevorzugte Lösungsmittel sind z. B. Aceton, Tetrahydrofuran, Methylethylketon und N-Methylpyrrolidon. Die Reaktionstemperatur liegt im Allgemeinen in einem Bereich von etwa 20 bis 160 °C, bevorzugt etwa 50 bis 100 °C. Dabei kann man z. B. den Ansatz unter Umgebungsdruck zum Rückfluss erhitzen. Zur Beschleunigung der Additionsreaktion können übliche Katalysatoren, wie z. B. Dibutylzinndilaurat, Zinn-(II)-octoat, 1,4-Diazabicyclo[2.2.2]octan oder Amine, wie Triethylamin, eingesetzt werden. Um eine unerwünschte, vorzeitige Polymerisation der $\alpha,\beta$-ethylenisch ungesättigten Gruppen zu vermeiden, können gegebenenfalls bei der Herstellung des Polyurethans Polymerisationsinhibitoren zugesetzt werden. Dafür eignen sich z. B. Chinone, Phenole oder Phenolderivate, wie p-Benzochinon, Hydrochinon, p-Methoxyphenol, Phenothiazin, 2,2,6,6-Tetramethylpiperidin-1-yloxy, 4-Hydroxy-2,2,6,6-tetramethylpiperidin- 1-yloxy etc. Geeignete Polymerisationsinhibitoren sind z. B. in Encyclopedia of Polymer Science & Technology, Bd. 7, 1967, S. 644-664, Verlag Wiley & Sons, New York-London-Sydney, beschrieben.

Nach der Herstellung des isocyanatgruppenhaltigen Polyurethanpräpolymers können gewünschtenfalls die einpolymerisierten ionogenen Gruppen, wie zuvor bei der Komponente B) beschrieben, durch Neutralisation oder Quaternisierung ionisiert werden. Wird zur Herstellung der erfindungsgemäßen Polymerisate als alleinige oder zusätzliche Komponente B) wenigstens eine Verbindung mit nur einer gegenüber Isocyanatgruppen reaktiven Gruppe eingesetzt, so erfolgt deren Zugabe im Allgemeinen erst gegen Ende oder nach der Umsetzung der übrigen Komponenten. Wird zur Herstellung der erfindungsgemäßen Polymerisate eine Komponente E) eingesetzt, die ebenfalls nur eine gegenüber Isocyanatgruppen reaktive Gruppe aufweist und somit als Abstopper wirkt, so erfolgt deren Zugabe im Allgemeinen auch erst gegen Ende oder nach der Umsetzung der übrigen Komponenten, gegebenenfalls auch erst nach Zugabe

der Komponente C).

Abschließend wird das isocyanatgruppenhaltige Präpolymer mit der Komponente C) zu dem erfindungsgemäßen, im Wesentlichen isocyanatgruppenfreien Polyurethan umgesetzt, wobei eine Molmassenerhöhung stattfindet. Nach einer bevorzugen Ausführungsform wird die Komponente C) gemeinsam mit wenigstens einem Teil des zur Herstellung der erfindungsgemäßen Polymerdispersionen erforderlichen Dispergierwasser eingesetzt. Dabei können die isocyanatgruppenhaltigen Polyurethanpräpolymere entweder in das Dispergierwasser, welches die Komponente C) enthält, eingetragen werden, oder man gibt eine Mischung aus Komponente C) und Dispergierwasser zu den isocyanatgruppenhaltigen Polyurethanpräpolymeren. Die Menge an Komponente C) wird dabei so gewählt, dass ein im Wesentlichen isocyanatgruppenfreies Polyurethan erhalten wird. Gewünschtenfalls kann das Lösungsmittel nach Zugabe des Dispergierwassers abdestilliert werden. Die Menge des Dispergierwassers wird so bemessen, dass die resultierenden wässrigen Polyurethandispersionen einen Feststoffgehalt von etwa 10 bis 70 Gew.-%, vorzugsweise etwa 20 bis 60 Gew.-%, aufweisen.

Bei der Herstellung der erfindungsgemäßen Polymerisate wird das Mengenverhältnis der Komponenten A) bis F) so gewählt, dass das Verhältnis von Isocyanatgruppen-Äquivalenten der Komponente F) zu Äquivalenten von gegenüber Isocyanatgruppen reaktiven Gruppen der Komponenten A) bis E) in dem erfindungsgemäß eingesetzten Bereich von 0,4:1 bis 0,9:1 liegt.

Im Allgemeinen sind die erfindungsgemäßen Polyurethanpolymerisate mit einem Gehalt an polaren funktionellen Gruppen im Bereich von etwa 1,3 bis 3,5 Gew.-% selbstdispergierbar, so dass auf den Einsatz eines Dispergierhilfsmittels verzichtet werden kann. Gewünschtenfalls können zu ihrer Herstellung jedoch übliche, dem Fachmann bekannte Dispergierhilfsmittel eingesetzt werden. Dazu zählen z. B. die im Folgenden genannten Emulgatoren und Schutzkolloide.

Nach einer geeigneten Ausführungsform enthalten die erfindungsgemäßen Polymerdispersionen zusätzlich wenigstens ein Dispergierhilfsmittel. Zur Herstellung dieser Polymerdispersionen eignen sich dann auch Polyurethanpolymerisate, die einen geringeren Anteil an Verbindungen der Komponente B) und somit an dispergieraktiven Gruppen eingebaut enthalten. Bevorzugt wird zur Herstellung dieser Polymerdispersionen ein Polymerisat eingesetzt, das die Komponente B) in einer Menge von etwa 0,1 bis 15 Gew.-%, bevorzugt etwa 0,1 bis 10 Gew.-%, bezogen auf die Gesamtmenge der Komponenten A) bis F), eingebaut enthält.

Vorzugsweise werden zur Herstellung der Polymerdispersionen, die zusätzlich wenigstens ein Dispergiermittel enthalten, Polymerisate mit einem Gehalt an polaren funktionellen Gruppen in einen Bereich von etwa 0,8 bis 1,5 Gew.-%, insbesondere etwa 0,9 bis 1,3 Gew.-%, eingesetzt.

Vorteilhafterweise lassen sich durch den Einsatz wenigstens eines Dispergierhilfsmittels erfindungsgemäße Polymerdispersionen mit einem höheren Feststoffgehalt und/oder einer geringeren Viskosität als bei entsprechenden Dispersionen ohne Dispergierhilfsmittel herstellen.

Vorzugsweise beträgt der Feststoffgehalt der erfindungsgemäßen Polymerdispersionen mit Dispergierhilfsmittel mindestens 38 Gew.-%, bevorzugt mindestens 40 Gew.-%.

Bevorzugt weisen die erfindungsgemäßen Polymerdispersionen im Allgemeinen geringere Viskositäten auf als Dispersionen auf Basis von Polyurethanen, bei deren Herstellung die gegenüber Isocyanatgruppen reaktiven Gruppen zu 100 % umgesetzt wurden.

Vorzugsweise beträgt die Viskosität der erfindungsgemäßen Polymerdispersionen mit Dispergierhilfsmittel, bestimmt nach DIN 53019 mit einem Rheomat 30 (23 °C, Schergefälle D = 250 $s^{-1}$) höchstens 1 000 mPas, bevorzugt höchstens 700 mPas.

Als Dispergierhilfsmittel können allgemein übliche Emulgatoren und/oder Schutzkolloide eingesetzt werden. Die Einsatzmenge liegt im Allgemeinen in einem Bereich von etwa 0,05 bis 20 Gew.-%, bevorzugt etwa 0,1 bis 15 Gew.-%, bezogen auf die Menge des härtbaren Polyurethanpolymerisates.

Geeignete Emulgatoren sind die dem Fachmann bekannten, üblicherweise bei der wässrigen Emulsionspolymerisation als Dispergiermittel eingesetzten Emulgatoren, wie sie z. B. in Houben-Weyl, Methoden der organischen Chemie, Band XIV/1, Makromolekulare Stoffe, Georg-Thieme-Verlag, Stuttgart, 1961, S. 411 - 420 beschrieben sind. Es sind sowohl anionische, kationische als auch nichtionische Emulgatoren geeignet. Vorzugsweise werden Emulgatoren eingesetzt, deren relative Molekulargewichte im Unterschied zu Schutzkolloiden üblicherweise unter 3500 Dalton liegen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_{10}$), Ethoxylate langkettiger Alkohole (EO-Grad: 3 bis 50, Alkylrest: $C_8$-$C_{36}$) sowie Polyethylenoxid/Polypropylenoxid-Blockcopolymere. Bevorzugt werden Ethoxylate langkettiger Alkanole (Alkylrest $C_{10}$-$C_{22}$, mittlerer Ethoxylierungsgrad 10 bis 50) und darunter besonders bevorzugt solche mit einem linearen $C_{12}$-$C_{18}$-Alkylrest und einem mittleren Ethoxylierungsgrad von 10 bis 50 sowie ethoxylierte Monoalkylphenole.

Geeignete anionische Emulgatoren sind beispielsweise Alkali- und Ammoniumsalze von Alkylsulfaten (Alkylrest: $C_8$-$C_{22}$), von Schwefelsäurehalbestern ethoxylierter Alkanole (EO-Grad: 2 bis 50, Alkylrest: $C_{12}$-$C_{18}$) und

ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192 - 208. Als anionische Emulgatoren sind ebenfalls Bis(phenoylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-$C_6$-$C_{20}$-Alkylpyridinen, -morpholinen oder -imidazolen, z. B. N-Laurylpyridiniumchlorid.

Geeignete Schutzkolloide sind z. B. Polyvinylalkohole und teilverseifte Polyvinylacetate, Polyvinylpropionate, Polyacrylate, Polyvinylpyrrolidon, Copolymere aus zwei oder mehreren der die zuvor genannten Polymere bildenden Monomeren, Cellulose und Cellulosederivate, wie z. B. Methylcellulose, Hydroxyethylcellulose, Carboxymethylcellulose, Stärke und Stärkederivate, wie z. B. Cyanalkyletherstärke, Hydroxyalkyletherstärke und Carboxymethylstärke, Proteine und Proteinabbauprodukte, wie z. B. Gelatine und Gelatinederivate etc. Eine ausführliche Beschreibung von Schutzkolloiden findet sich in Houben-Weyl, Methoden der Organischen Chemie, Band XIV/1, Makromolekulare Stoffe, Georg-Thieme-Verlag, Stuttgart, 1961, S. 411-420.

Bevorzugt wird zur Herstellung der erfindungsgemäßen Polymerdispersionen mit Dispergierhilfsmitteln wenigstens ein Schutzkolloid eingesetzt. Dabei handelt es sich insbesondere um Copolymere aus vinylpyrrolidon und Vinylacetat oder Vinylpropionat, die z. B. als Collacral®-Marken der Firma BASF Aktiengesellschaft erhältlich sind.

Die erfindungsgemäßen härtbaren wässrigen Polymerdispersionen eignen sich vorzugsweise zur Herstellung von Beschichtungen, z. B. von flexiblen und gegebenenfalls saugfähigen Substraten wie Papier, Karton, Leder oder von nicht-flexiblen Substraten aus Metall oder Kunststoff. Vorzugsweise eignen sie sich zur Herstellung von hochwertigen, kratzfesten und chemikalienresistenten Lacküberzügen auf Holz. Dabei werden bereits nach dem Verdunsten des Wassers ohne Vernetzung klebfreie, staubtrockene Filme mit einer guten mechanischen Beanspruchbarkeit, wie z. B. einer hohen Härte und/oder einer guten Flexibilität, erhalten. So beträgt die Pendelhärte, gemessen nach DIN 53157 eines 20 Minuten bei 60 °C getrockneten Films mindestens 20 s, bevorzugt mindestens 25 s.

Werden die noch nicht strahlengehärteten Filme auf ihre Klebfreiheit untersucht, so tritt im Wesentlichen keine Beschädigung der Beschichtung auf.

Die Vernetzung der Polyurethane kann mit energiereicher Strahlung wie UV-, Elektronen-, Röntgen- oder $\gamma$-Strahlung erfolgen. Dabei ist die UV-Härtung besonders bevorzugt. Sie kann gewünschtenfalls in Gegenwart üblicher Photoinitiatoren, wie z. B. aromatischer Ketonverbindungen, wie Benzophenon, Alkylbenzophenonen, Michlers Keton, Anthron, halogenierten Benzophenonen, 2,4,6-Trimethylbenzoyldiphenylphosphinoxid, Phenylglyoxylsäureestern, Anthrachinon und seinen Derivaten, Benzilketalen, Hydroxyalkylphenonen, etc. erfolgen. Dabei können auch Gemische dieser Verbindungen eingesetzt werden. Die Einsatzmenge der Photoinitiatoren beträgt im Allgemeinen etwa 0,01 bis 20 Gew.-%, bevorzugt 0,1 bis 10 Gew.-%, bezogen auf den Festgehalt der zu härtenden Komponenten.

Die Härtung der wässrigen Polymerdispersionen kann gewünschtenfalls auch thermisch radikalisch unter Zusatz der üblichen Polymerisationsinitiatoren erfolgen. Dazu zählen sämtliche unter den Härtungsbedingungen in Radikale zerfallende Verbindungen, wie z. B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. Dabei können auch Mischungen verschiedener Polymerisationsinitiatoren, z. B. Mischungen aus Wasserstoffperoxid und Natrium- oder Kaliumperoxodisulfat eingesetzt werden. Als Initiatoren geeignete organische Peroxide sind z. B. in der EP-A-536 597 beschrieben. Die Einsatzmenge der Polymerisationsinitiatoren beträgt im Allgemeinen etwa 0,01 bis 5 Gew.-%, bezogen auf die Menge der zu polymerisierenden Polyurethane. Als Initiatoren kommen außerdem Redoxkatalysatoren in Betracht, die als oxidierende Komponente z. B. mindestens eine der oben angegebenen Per-Verbindungen und als reduzierende Komponente z. B. Ascorbinsäure, Glucose, Sorbose, Ammonium- oder Alkalimetallhydrogensulfit, -thiosulfat, -hyposulfit, -pyrosulfit oder -sulfid, Metallsalze wie Eisen-II-Ionen oder Silberionen oder Natriumhydroxymethylsulfoxylat enthalten.

Die Pendelhärte eines strahlungsgehärteten Films beträgt 1 Stunde nach der Strahlungshärtung im Allgemeinen mindestens 160 s. Die mit den erfindungsgemäßen Polyurethandispersionen erhaltenen, UVgehärteten Verfilmungen zeigen im Wesentlichen keine Verschlechterung der Pendelhärte im Anschluss an die Strahlungshärtung. So beträgt die Pendelhärte auch 12 Stunden nach der Strahlungshärtung im Allgemeinen mindestens 160 s. Zur Bestimmung der Flexibilität wurde die Erichsentiefung nach DIN 53156 bestimmt. Dabei werden überraschenderweise auch bei Einsatz eines aromatischen Polyisocyanates, wie Toluylendiisocyanat, als Komponente F) Filme mit einer guten Flexibilität erhalten. Die Erichsentiefung eines strahlungsgehärteten Films einer Polymerdispersion auf Basis eines erfindungsgemäßen Polymerisats beträgt dann 24 Stunden nach der UV-Härtung im Allgemeinen mindestens 4,0, vorzugsweise mindestens 5,0.

Die aus den erfindungsgemäßen härtbaren Polymerdispersionen erhaltenen Filme sind im Allgemeinen kratzfest. So beträgt die Bleistifthärte der Filme nach der Strahlungshärtung mindestens 3H, bevorzugt mindestens 4H.

Die erfindungsgemäßen Polymerdispersionen lassen sich durch übliche Verfahren, wie Spritzen, Walzen, Rakeln, Gießen, Streichen oder Tauchen auf unterschiedlichste Substrate applizieren. Dabei können die erfindungsgemäßen Polymerdispersionen als alleiniges Lackbindemittel oder mit in der Lacktechnologie üblichen Zusatzstoffen, wie z. B. Bindemitteln, Hilfsstoffen, Pigmenten, Farbstoffen oder Mattierungsmitteln, kombiniert werden.

Ein weiterer Gegenstand der Erfindung sind Beschichtungsmittel, die mindestens ein erfindungsgemäßes Polymerisat oder eine wässrige Polymerdispersion umfassen. Diese Beschichtungsmittel können gegebenenfalls ein Lösungsmittelgemisch aus Wasser und mindestens einem der zuvor genannten wassermischbaren Lösungsmittel aufweisen. Vorzugsweise sind diese Beschichtungsmittel im Wesentlichen frei von organischen Lösungsmitteln.

Die Erfindung wird anhand der nachfolgenden, nicht einschränkenden Beispiele näher erläutert.

Beispiele

Die Hydroxylzahl ist definiert als mg KOH/g Produkt. Ein geeignetes Verfahren zur Bestimmung der Hydroxylzahl wird z. B. von J. Makes und J. Horky in farbe und lack, 94. Jhrg. (1988), s. 898 ff., beschrieben. Die Bestimmung kann ebenfalls titrimetrisch nach folgender Vorschrift erfolgen:

1. Geräte und Hilfsmittel

Laborwaage Messgenauigkeit 0,01 g
Bechergläser 125 ml
Titroprozessor 636 (der Firma Metrohm)
Dosimat E 635, Dosimat 665 (der Firma Metrohm)
0,25 n methanolische KOH, Essigsäureanhydrid 5%ig in THF-Dioxan (Verhältnis 1:1), 4-Dimethylaminopyridin (DMAP) 1%ig in THF-Dioxan

2. Durchführung

2.1 Blindwert

10 ml DMAP-Lösung werden mit dem Dosimaten in ein sauberes Becherglas gegeben und anschließend 5 ml Essigsäureanhydrid-Lösung dazugegeben. Dann lässt man 5 Minuten abgedeckt reagieren und gibt 1 ml vollentsalztes Wasser zu. Nach weiteren 10 Minuten werden 100 ml eines Gemisches aus THF-Dioxan (Verhältnis 1:1) zugegeben und anschließend mit einer 0,25 n methanolischen KOH titriert.

2.2 Probe

Ca. 1 g Probe und 10 ml 4-Dimethylaminopyridin-Lösung werden mit dem Dosimaten 665 in ein Becherglas gegeben. Dann werden 5 ml Essigsäureanhydrid-Lösung zugegeben und die Lösungen 5 Minuten abdeckt reagieren gelassen. Nach Zugabe von 100 ml THF-Dioxan (Verhältnis 1:1) wird mit einer 0,25 n methanolischen KOH titrieren.

3. Auswertung

$$\text{OH-Zahl [mg KOH/g Substanz]} = \frac{\text{(Blindwert ml - Verbrauch Probe ml)*56,1 g/mol*0,25 n*Titer KOH}}{\text{Einwaage in g (Feststoff)}}$$

Der Gehalt an polaren, funktionellen Gruppen, d. h. der Carboxyl-, Phosphonat-, Sulfonatgehalt wurde bestimmt über die Einwaage der Komponente B).

A) Polyurethanherstellung

In einem 4-Halskolben, der mit Rührer, Tropftrichter, Thermometer und Rückflusskühler versehen war, wurden hydroxylgruppenhaltiges ungesättigtes Präpolymer nach Tabelle 1 mit den in Tabelle 2 angegebenen Mengen an Dimethylolpropionsäure, gegebenenfalls Kettenverlängerer, Aceton und Dibutylzinndilaurat vorgelegt und zum Rückfluss

erhitzt. Dann wurde ein Diisocyanat in einem Anteil nach Tabelle 2 innerhalb einer Stunde zugetropft. Bei Rückflusstemperatur wurde das Reaktionsgemisch so lange gerührt, bis der Isocyanatgruppengehalt des Gemischs praktisch konstant blieb. Danach kühlte man auf 40 °C ab und neutralisierte mit der in Tabelle 2 angegebenen Menge Triethylamin. Nach Abkühlen auf Umgebungstemperatur gab man die Polyurethanlösung unter starkem Rühren in eine Mischung aus Ethylendiamin in Wasser gemäß Tabelle 2, wobei spontan eine Dispersion entstand. Das Aceton wurde dann im Vakuum bei 40 °C abdestilliert und die Dispersion abschließend durch Verdünnen mit Wasser auf den gewünschten Feststoffgehalt eingestellt. Die Eigenschaften der Dispersionen sind in Tabelle 3 wiedergegeben.

Tabelle 1

| Hydroxylgruppenhaltige Präpolymere | |
|---|---|
| Präpolymer | Typ |
| A | 46 Gew.-% Polyetheracrylat<br>54 Gew.-% Bisphenol A-diglycidetherdiacrylat |
| B | 56 Gew.-% Polyetheracrylat<br>44 Gew. -% Triglycidylisocyanurattriacrylat |
| C | 50 Gew. -% Polyetheracrylat<br>50 Gew. -% (Bis-epoxycyclohexylmethylcarboxylat)diacrylat |
| D | 50 Gew. -% Polyetheracrylat<br>50 Gew. -% Cyclohexandimethyloldiglycidetherdiacrylat |

Die Präpolymere weisen OH-Zahlen auf, die größer als 120 mg KOH/g sind.

Tabelle 2: Polyurethanherstellung

| Bsp. Nr. | Präpolymer nach Tab. 1 [g] | Dimethylolpropionsäure [g] | Dibutylzinndilaurat [g] | Aceton [g] | Isocyanat [g] | Triethylamin [g] | Ethylendiamin [g] | Kettenverlängerer [g] | Wasser [g] | Dispergiermittel[5] [Gew.-%] | Umsetzungsgrad der gegenüber NCO reaktiven Gruppen [%] |
|---|---|---|---|---|---|---|---|---|---|---|---|
| V1 | 150 A | 20,1 | 0,26 | 139 | 62,16 IPDI[1]<br>23,18 HDI[2] | 15,16 | 3,6 | 4,5 PE-diol[3]<br>2,25 BD-1,4[4] | 420 | ohne | 100 |
| 1 | 150 A | 20,1 | 0,26 | 139 | 54,83 IPDI<br>20,66 HDI | 15,16 | 3,6 | 4,5 PE-diol<br>2,25 BD-1,4 | 407 | ohne | 75 |
| 2 | 150 A | 20,1 | 0,26 | 139 | 48,39 IPDI<br>18,23 HDI | 15,16 | 3,6 | 4,5 PE-diol<br>2,25 BD-1,4 | 394 | ohne | 50 |
| V2 | 155 A | 20,1 | 0,27 | 138 | 56,83 IPDI<br>21,50 HDI | 12,12 | 3,6 | ohne | 404 | ohne | 100 |
| 3 | 150 A | 20,1 | 0,27 | 138 | 43,95 IPDI<br>16,63 HDI | 15,16 | 3,6 | ohne | 375 | ohne | 50 |
| V3 | 150 B | 20,1 | 0,26 | 139 | 66,16 IPDI<br>23,18 HDI | 15,16 | 3,6 | 4,5 PE-diol<br>2,25 BD-1,4 | 420 | ohne | 100 |
| 4 | 150 B | 20,1 | 0,26 | 139 | 48,39 IPDI<br>18,29 HDI | 15,16 | 3,6 | 4,5 PE-diol<br>2,25 BD-1,4 | 394 | ohne | 50 |
| V4 | 150 C | 20,1 | 0,26 | 139 | 66,16 IPDI<br>23,18 HDI | 15,16 | 3,6 | 4,5 PE-diol<br>2,25 BD-1,4 | 420 | ohne | 100 |

| Bsp. Nr. | Präpolymer nach Tab. 1 [g] | Dimethylolpropionsäure [g] | Dibutylzinndilaurat [g] | Aceton [g] | Isocyanat [g] | Triethylamin [g] | Ethylendiamin [g] | Kettenverlängerer [g] | Wasser [g] | Dispergiermittel[5] [Gew.-%] | Umsetzungsgrad der gegenüber NCO reaktiven Gruppen [%] |
|---|---|---|---|---|---|---|---|---|---|---|---|
| 5 | 150 C | 20,1 | 0,26 | 139 | 48,39 IPDI<br>18,23 HDI | 15,16 | 3,6 | 4,5 PE-diol<br>2,25 BD-1,4 | 394 | ohne | 50 |
| 6 | 150 D | 20,1 | 0,26 | 139 | 48,39 IPDI<br>18,23 HDI | 15,16 | 3,6 | 4,5 PE-diol<br>2,25 BD-1,4 | 394 | ohne | 50 |
| V5 | 150 A | 8,04 | 0,23 | 133 | 52,39 IPDI<br>19,74 HDI | 6,06 | 5,4 | 4,5 PE-diol<br>2,25 BD-1,4 | 232 | 42<br>(30-%ig) | 100 |
| 7 | 150 A | 8,04 | 0,27 | 133 | 47,17 IPDI<br>17,81 HDI | 6,06 | 5,4 | 4,5 PE-diol<br>2,25 BD-1,4 | 225 | 42<br>(30-%ig) | 80 |
| V6 | 150 A | 20,1 | 0,26 | 139 | 71,95 TDI[6] | 15,16 | 3,6 | 4,5 PE-diol<br>2,25 BD-1,4 | 401 | ohne | 100 |
| 8 | 150 A | 20,1 | 0,26 | 139 | 65,85 TDI | 15,16 | 3,6 | 4,5 PE-diol<br>2,25 BD-1,4 | 393 | ohne | 80 |
| 9 | 150 A | 20,1 | 0,26 | 139 | 65,85 TDI | 14,40 [7] | 3,6 | 4,5 PE-diol<br>2,25 BD-1,4 | 393 | ohne | 80 |

[1] Isophorondiisocyanat
[2] Hexamethylendiisocyanat
[3] Polyesterol aus Isophthalsäure, Adipinsäure (1:1) und Hexandiol, $M_n$ = 1 000
[4] Butandiol-1,4

5) Copolymer aus Vinylpropionat und Vinylpyrrolidon; Gewichtsmenge bezogen auf Gesamtgewicht aller Komponenten einschließlich Lösungs-/Dispergiermittel

6) Isomerengemisch aus 80 % 2,4- und 20 % 2,6-Toluylendiisocyanat

7) 95 % neutralisiert

B) Eigenschaften der Polymerdispersion

Der Feststoffgehalt der wässrigen Polymerdispersionen wurde bestimmt nach DIN 53216 Teil 1 (1 h, 125 °C).

Die Viskosität wurde in einem Rheomat 30 nach DIN 53019 bei einer Temperatur von 23 °C und einem Schergefälle D = 250 $s^{-1}$ bestimmt.

Die Eigenschaften der Dispersionen sind in Tabelle 3 wiedergegeben.

Tabelle 3

| Eigenschaften der Dispersionen | | |
|---|---|---|
| Bsp. Nr. | Feststoffgehalt [%] | Viskosität [mPas] |
| V1 | 36 | 1667 |
| 1[a)] | 40 | 3359 |
| 2[a)] | 38 | 2986 |
| V2 | 38 | 2289 |
| 3 | 40 | 55,5 |
| V3 | es konnte keine stabile Dispersion erhalten werden | nicht bestimmbar |
| 4 | 40 | 2065 |
| V4 | es konnte keine stabile Dispersion erhalten werden | nicht bestimmbar |
| 5 | 30 | 466,5 |
| 6 | 40 | 1079,8 |
| V5 | 47 | nicht bestimmbar |
| 7 | 50 | 544,2 |
| V6 | 40 | 845,9 |
| 8 | 40 | 119,5 |
| 9 | 40 | 91,7 |

[a)] Bei Verdünnen auf einen Feststoffgehalt von 36 % zeigen diese Dispersionen eine Viskosität von < 1667 mPas.

Die erfindungsgemäßen Polyurethanpolymerisate lassen sich zu Polymerdispersionen mit guten anwendungstechnischen Eigenschaften formulieren. Insbesondere weisen diese Dispersionen im Allgemeinen hohe Feststoffgehalte und niedrigere Viskositäten auf als entsprechende Dispersionen auf Basis von Polymerisaten, bei deren Herstellung die gegenüber Isocyanatgruppen reaktiven Gruppen zu 100 % umgesetzt wurden.

Getrocknete und UV-gehärtete Filme auf Basis der erfindungsgemäßen Polyurethanpolymerisate weisen ebenfalls gute anwendungstechnische Eigenschaften, z. B. hohe Pendelhärten, hohe Bleistifthärten und geringe Erichsen-Tiefungswerte auf.

## Patentansprüche

**1.** Härtbares Polyurethanpolymerisat, welches

A) 10 bis 60 Gew.-%, bezogen auf das Gesamtgewicht der Komponenten A) bis F), wenigstens eines hydroxylgruppenhaltigen Präpolymers mit mindestens einer thermisch oder photochemisch polymerisierbaren $\alpha,\beta$-ethylenisch ungesättigten Doppelbindung,

B) 0,1 bis 30 Gew.-%, bezogen auf das Gesamtgewicht der Komponenten A) bis F), wenigstens einer Verbindung mit mindestens einer gegenüber Isocyanatgruppen reaktiven Hydroxyl- und/oder primären oder sekundären Aminogruppe und zusätzlich wenigstens einer polaren funktionellen Gruppe pro Molekül,

C) 0,1 bis 30 Gew.-%, bezogen auf das Gesamtgewicht der Komponenten A) bis F), wenigstens einer Verbindung, die ausgewählt ist unter Diaminen, Polyaminen und Mischungen davon,

D) 0 bis 10 Gew.-%, bezogen auf das Gesamtgewicht der Komponenten A) bis F), wenigstens einer weiteren von A), B), C) und E) verschiedenen Verbindung mit mindestens zwei gegenüber Isocyanatgruppen reaktiven Gruppen, wobei es sich um Hydroxylgruppen und Mischungen von Hydroxylgruppen mit primären und/oder sekundären Aminogruppen handelt,

E) 0 bis 20 Gew.-%, bezogen auf das Gesamtgewicht der Komponenten A) bis F), wenigstens einer Verbindung mit einer gegenüber Isocyanatgruppen reaktiven Gruppe,

F) 10 bis 65 Gew.-%, bezogen auf das Gesamtgewicht der Komponenten A) bis F), wenigstens einer Verbindung mit mindestens zwei Isocyanatgruppen,

einpolymerisiert enthält, und die Salze davon, **dadurch gekennzeichnet, dass** das Verhältnis von Isocyanatgruppen-Äquivalenten der Komponente F) zu Äquivalenten von gegenüber Isocyanatgruppen reaktiven Gruppen der Komponenten A) bis E) in einem Bereich von 0,4:1 bis 0,9:1 liegt.

**2.** Polymerisat nach Anspruch 1, **dadurch gekennzeichnet, dass** die Summe der Hydroxylzahlen der Komponenten A) und D) in einem Bereich von 40 bis 300 mg KOH/g, bevorzugt 121 bis 300 mg KOH/g, insbesondere 125 bis 220 mg KOH/g, liegt.

**3.** Polymerisat nach einem der vorhergehenden Ansprüche, **dadurch gekennzeichnet, dass** das Präpolymer A) ausgewählt ist unter Polyesteracrylaten, Polyetheracrylaten, Polyurethanacrylaten, Epoxyacrylaten und Mischungen davon.

**4.** Polymerdispersion, enthaltend wenigstens ein härtbares Polymerisat nach einem der Ansprüche 1 bis 3 in dispergierter Form.

**5.** Polymerdispersion nach Anspruch 4, die zusätzlich wenigstens ein Dispergierhilfsmittel enthält.

**6.** Polymerdispersion nach Anspruch 5, **dadurch gekennzeichnet, dass** der Feststoffgehalt mindestens 40 Gew.-%, bevorzugt mindestens 45 Gew.-%, beträgt.

**7.** Polymerdispersion nach einem der Ansprüche 4 bis 6 in Form einer wässrigen Dispersion.

**8.** Beschichtungsmittel, das wenigstens ein Polymerisat nach einem der Ansprüche 1 bis 3 umfasst.

**9.** Beschichtungsmittel auf Wasserbasis, das wenigstens eine Polymerdispersion nach einem der Ansprüche 4 bis 7 umfasst.

**10.** Verwendung von Polymerisaten nach einem der Ansprüche 1 bis 3 und von Polymerdispersionen nach einem der Ansprüche 4 bis 7 zur Beschichtung von Substraten.

## Claims

**1.** A curable polyurethane polymer containing in copolymerized form

A) from 10 to 60% by weight, based on the overall weight of components A) to F), of at least one hydroxyl-containing prepolymer having at least one thermally or photochemically polymerizable $\alpha,\beta$-ethylenically unsaturated double bond,

B) from 0.1 to 30% by weight, based on the overall weight of components A) to F), of at least one compound having at least one isocyanate-reactive hydroxyl group and/or primary or secondary amino group and, in addition, at least one polar functional group per molecule,

C) from 0.1 to 30% by weight, based on the overall weight of components A) to F), of at least one compound selected from diamines, polyamines and mixtures thereof,

D) from 0 to 10% by weight, based on the overall weight of components A) to F), of at least one further compound other than A), B), C) and E) having at least two isocyanate-reactive groups, which are hydroxyl groups and mixtures of hydroxyl groups with primary and/or secondary amino groups,

E) from 0 to 20% by weight, based on the overall weight of components A) to F), of at least one compound having an isocyanate-reactive group,

F) from 10 to 65% by weight, based on the overall weight of components A) to F), of at least one compound having at least two isocyanate groups,

or a salt thereof, wherein the ratio of isocyanate group equivalents of component F) to equivalents of isocyanate-reactive groups of components A) to E) is in a range from 0.4:1 to 0.9:1.

**2.** A polymer as claimed in claim 1, wherein the sum of the hydroxyl numbers of components A) and D) is in a range from 40 to 300 mg KOH/g, preferably from 121 to 300 mg KOH/g, in particular from 125 to 220 mg KOH/g.

**3.** A polymer as claimed in either of the preceding claims, wherein the prepolymer A) is selected from the polyester acrylates, polyether acrylates, polyurethane acrylates, epoxy acrylates and mixtures thereof.

**4.** A polymer dispersion comprising in dispersed form at least one curable polymer as claimed in any of claims 1 to 3.

**5.** A polymer dispersion as claimed in claim 4, further comprising at least one dispersing auxiliary.

**6.** A polymer dispersion as claimed in claim 5, whose solids content is at least 40% by weight, preferably at least 45% by weight.

**7.** A polymer dispersion as claimed in any of claims 4 to 6 in the form of an aqueous dispersion.

**8.** A coating composition comprising at least one polymer as claimed in any of claims 1 to 3.

**9.** A water-based coating composition comprising at least one polymer dispersion as claimed in any of claims 4 to 7.

**10.** The use of a polymer as claimed in any of claims 1 to 3 or polymer dispersion as claimed in any of claims 4 to 7 to coat substrates.

**Revendications**

**1.** Polymère de polyuréthanne durcissable, qui contient, à l'état copolymérisé,

A) 10 à 60% en poids, par rapport au poids total des composants A) à F), d'au moins un prépolymère contenant des groupes hydroxyle et présentant au moins une double liaison $\alpha,\beta$-éthyléniquement insaturée, polymérisable par voie thermique ou photochimique,
B) 0,1 à 30% en poids, par rapport au poids total des composants A) à F), d'au moins un composé comportant au moins un groupe hydroxyle et/ou amino primaire ou secondaire réactif vis-à-vis de groupes isocyanate et en supplément au moins un groupe fonctionnel polaire par molécule,
C) 0,1 à 30% en poids, par rapport au poids total des composants A) à F), d'au moins un composé qui est choisi parmi des diamines, des polyamines et leurs mélanges,
D) 0 à 10% en poids, par rapport au poids total des composants A) à F), d'au moins un autre composé différent de A), B), C) et E), comportant au moins deux groupes réactifs vis-à-vis de groupes isocyanate, pour lesquels il s'agit de groupes hydroxyle et de mélanges de groupes hydroxyle avec des groupes amino primaires et/ou secondaires,
E) 0 à 20% en poids, par rapport au poids total des composants A) à F), d'au moins un composé comportant un groupe réactif vis-à-vis de groupes isocyanate,
F) 10 à 65% en poids, par rapport au poids total des composants A) à F), d'au moins un composé comportant au moins deux groupes isocyanate,

et les sels de celui-ci,
**caractérisé en ce que** le rapport entre les équivalents en groupes isocyanate du composant F) et les équivalents

en groupes réactifs vis-à-vis de groupes isocyanate des composants A) à E) est compris dans une gamme de 0,4/1 à 0,9/1.

2. Polymère suivant la revendication 1, **caractérisé en ce que** la somme des indices d'hydroxyle des composants A) et D) est comprise dans une gamme de 40 à 300 mg de KOH/g, de préférence de 121 à 300 mg de KOH/g, en particulier de 125 à 220 mg de KOH/g.

3. Polymère suivant l'une des revendications précédentes, **caractérisé en ce que** le prépolymère A) est choisi parmi des polyesteracrylates, des polyétheracrylates, des polyuréthanneacrylates, des époxyacrylates et leurs mélanges.

4. Dispersion de polymère, contenant au moins un polymère durcissable suivant l'une des revendications 1 à 3, sous une forme dispersée.

5. Dispersion de polymère suivant la revendication 4, qui contient en supplément au moins un adjuvant de dispersion.

6. Dispersion de polymère suivant la revendication 5, **caractérisée en ce que** la teneur en matière solide est d'au moins 40% en poids, de préférence d'au moins 45% en poids.

7. Dispersion de polymère suivant l'une des revendications 4 à 6, sous la forme d'une dispersion aqueuse.

8. Produit de revêtement qui comporte au moins un polymère suivant l'une des revendications 1 à 3.

9. Produit de revêtement à base d'eau, qui comporte au moins une dispersion de polymère suivant l'une des revendications 4 à 7.

10. Utilisation de polymères suivant l'une des revendications 1 à 3 et de dispersions de polymère suivant l'une des revendications 4 à 7, pour le revêtement de substrats.